# EUROPEAN PATENT SPECIFICATION

(11) **EP 1 771 002 B1**
(45) Date of publication and mention of the grant of the patent: **27.12.2017**
(21) Application number: 06020604.2
(22) Date of filing: 29.09.2006
(51) Int. Cl.: H04N 7/14

(54) **Mobile video communication terminal**
Mobiles Bildübertragungsendgerät
Terminal de communication vidéo mobile

(30) Priority: 30.09.2005 KR 20050091880; 15.09.2006 KR 20060089747
(43) Date of publication of application: 04.04.2007
(73) Proprietor: LG Electronics Inc., Yeongdeungpo-gu Seoul 150-721 (KR)
(72) Inventor: Lee, Choon Sik, Mapo-gu Seoul (KR); Mun, Su Jung, Yuseong-gu, Daejeon-si (KR)
(74) Representative: Katérle, Axel

(56) References cited:
- WO-A1-03/061216
- WO-A1-03/091902
- GB-A- 2 351 201

## Description

This application claims the benefit of the Korean Patent Application Nos. 10-2005-0091880, filed on September 30, 2005, and 10-2006-0089747 filed on September 15, 2006.

### BACKGROUND OF THE INVENTION

### Field of the Invention

The present invention relates to a mobile communication terminal and method of image processing in video communications using the same, and more particularly, to a mobile communication terminal and method of displaying an icon using the same. Although the present invention is suitable for a wide scope of applications, it is particularly suitable for a function of displaying icons on screens of calling and called parties, respectively in the course of video communications.

### Discussion of the Related Art

Generally, wireless data communications mean a communication function of exchanging various data including characters, numerals, images and the like via a base station system between a mobile user and a correspondent party using a wireless transmission/reception enabled portable terminal.

Namely, a wireless data communication system is a mobile communication system that exchanges or searches data bi-directionally using such a terminal as a cellular phone, a portable computer, a PDA, an IMT-200 terminal and the like while a user is moving.

In the mobile communication systems, a cellular-phone mobile communication system is the first commercialized one to rapidly grow. In particular, the cellular-phone mobile communication system implements a wireless channel switching function between cells according to a subscriber's movement by dividing a service-available area in North America in the early stage of 1980's into 10∼100km hexagonal cells and using the same frequency channel repeatedly by a geographically remote cell.

Recently, the third generation mobile communication system called IMT-200 has been developed in use. The IMT-2000 system is a mobile communication system than enable access to an information service network including various communication services, e.g., audio and video data, supported by a fixed communication network such as PSTN/ISDN.B-ISDN according to a request made by a user using a radio link.

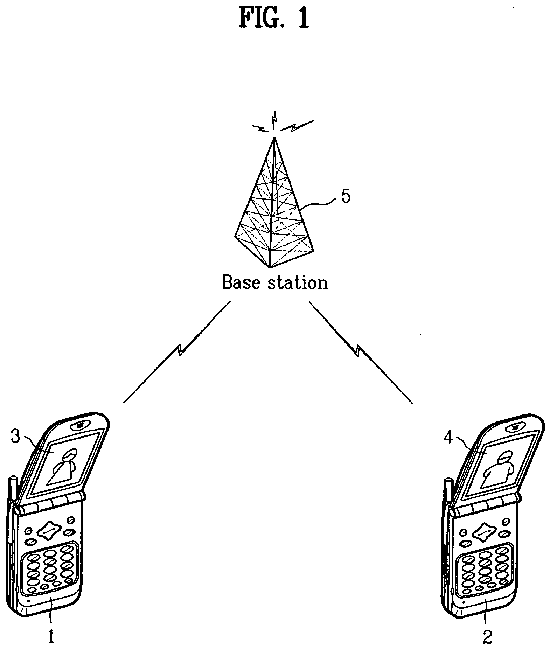

FIG. 1 is a diagram for explaining video communications according to a related art.

Referring to FIG. 1, a terminal 1 and a terminal 2 transmit and receive images photographed using cameras provided to the terminals 1 and 2. The terminals 1 and 2 then perform audio communications while the images are displayed on display units 3 and 4, respectively.

A base station 5 processes call signals transmitted from the terminals 1 and 2, respectively or transmits a called signal requested by an external system to each of the terminals 1 and 2. And, the base station 5 processes channel information with the corresponding terminal within a sector via a paging channel.

However, the related art terminal transmits a signal of the image photographed by the camera only. So, it is unable to additionally insert user-specific video information, sentences, characters and/or the like at all.

WO 03/061216 A1 relates to a system for transferring and filtering video content data.

### SUMMARY OF THE INVENTION

The present invention is directed to a mobile communication terminal and a method of image processing in video communications using the same according to independent claims 7 and 1, respectively, that substantially obviate one or more problems due to limitations and disadvantages of the related art.

An object of the present invention is to provide a mobile communication terminal and method of image processing in video communications using the same, by which convenience of a user in video communications can be enhanced.

Another object of the present invention is to provide a mobile communication terminal and method of image processing in video communications using the same, by which icons can be displayed on screens of calling and called parties in video communications.

And, the present invention is characterized in that an image provided by a camera and an image inputted by a user can be overlaid on screens of calling and called parties.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of image processing in video communications using a mobile communication terminal according to the present invention includes the steps of entering an icon input mode in performing the video communications with at least one terminal using the mobile communication terminal; generating an image control signal which includes information of an icon and a position of the icon; and transmitting the image control signal to at least one of the mobile terminal in state of video communication.

Preferably, the icon is overlaid on the image displayed on a display device. Preferably, the image control signal is packet data. Preferably, the icon and the position information are inputted via a touch screen.

Preferably, the position information of the icon indicates at least one position of a screen divided similar to a keypad arrangement.

Preferably, the method further includes the step of selecting a correspondent terminal to receive the image control signal.

Preferably, the method further includes the step of selecting a target image on which the icon will be displayed.

Preferably, the icon is displayed both terminals in real time.

In another aspect of the present invention, a method of image processing in video communications using a mobile communication terminal includes the steps of storing a first image inputted by a user in an overlay buffer in the course of the video communications with at least one correspondent communication terminal; superimposing a second image provided by the camera with the first image stored in the overlay buffer into a superimposed image; compressing the superimposed image into compressed image data; and transmitting the compressed image data to at least one correspondent communication terminal.

Preferably, the method further includes the step of standing by for a selection signal of the user to temporarily store the first image stored in the overlay buffer and superimpose the temporarily stored first image on the second image. Preferably, the image inputted by the user is inputted via a touchscreen.

Preferably, the method further includes the step of selecting a correspondent terminal to receive the compressed image data.

In another aspect of the present invention, a mobile communication terminal includes a camera, a wireless transmitting/receiving unit transmitting/receiving a wireless signal, a memory storing data of a plurality of icons, an input unit to select at least one of a plurality of the icons stored in the memory and to input position information for displaying the selected at least one icon in the course of video communications, and a control unit generating an image control signal using a signal provided by the input unit, the control unit controlling the wireless transmitting/receiving unit transmit the image control signal to a correspondent video communication terminal with an image photographed by the camera.

Preferably, the image control signal is packet data. Preferably, the input unit comprises a touchscreen.

Preferably, the input unit includes a terminal keypad. And, at least one position on a screen divided similar to keypad arrangement is designated as an icon displaying position using the terminal keypad.

Preferably, the image control signal includes code information of the selected at least one icon and the position information for displaying the selected at least one icon only.

Preferably, the image control signal includes a sound control signal.

Preferably, the image control signal is a control signal to overlay the selected at least one icon on a transmitted image.

In another aspect of the present invention, a mobile communication terminal includes a camera; a wireless transmitting/receiving unit transmitting/receiving a wireless signal; and a control unit performing a control for executing video communications with at least one correspondent terminal using the camera and the wireless transmitting/receiving unit, analysing an image control signal received via the wireless transmitting/receiving unit, and controlling a display unit display an icon on a designated position of an image displayed on the display unit.

Preferably, the icon is provided by the at least one correspondent terminal to be overlaid on an image displayed via the display unit.

In a further aspect of the present invention, a mobile communication terminal includes a camera; a wireless transmitting/receiving unit transmitting/receiving a wireless signal; an input unit for inputting a second image to be superimposed to a first image provided from the camera in the course of video communications; an overlay buffer for storing the second image inputted by the input unit; and a control unit outputting a control signal to superimpose the first image provided by the camera with the second image stored in the overlay buffer, compressing the superimposed image and transmitting the compressed data to a correspondent terminal via the wireless transmitting/receiving unit.

Preferably, the mobile communication terminal further includes an interface reading the data to be displayed by being added to the image to be transmitted in the course of the video communications from outside.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a diagram for explaining video communications according to a related art;

FIG. 2 is a block diagram of a terminal according to the present invention;

FIG. 3 is a flowchart of a method of processing an image in video communications according to one embodiment of the present invention;

FIGs. 4A to 4C are exemplary diagrams of display screens in the course of executing an image processing method according to one embodiment of the present invention;

FIG. 5A and FIG. 5B are flowcharts of a method of processing an image in video communications according to another embodiment of the present invention;

FIG. 6 is a perspective diagram of a terminal according to one embodiment of the present invention;

FIGs. 7A to 7G are exemplary diagrams of screens appearing in the course of selecting an icon to be transmitted according to an embodiment of the present invention;

FIG. 8A to 8D are exemplary diagrams of screens appearing in the course of selecting a display position of an icon according to an embodiment of the present invention; and

FIG. 9A to 9C are exemplary diagrams of icons displayed on display units of two terminals, respectively according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

First of all, video communications between mobile communication terminals are exemplarily shown in the following description. Yet, concepts of the present invention can be implemented between a mobile communication terminal and a wireless-communication enabled terminal such as a PDA, computer and the like if a same application is executed by two terminals performing video communications in-between. And, an icon used in the description of the present invention is a common name that designates a text, a graphic image or animation image. In these days, there are many movable icons.

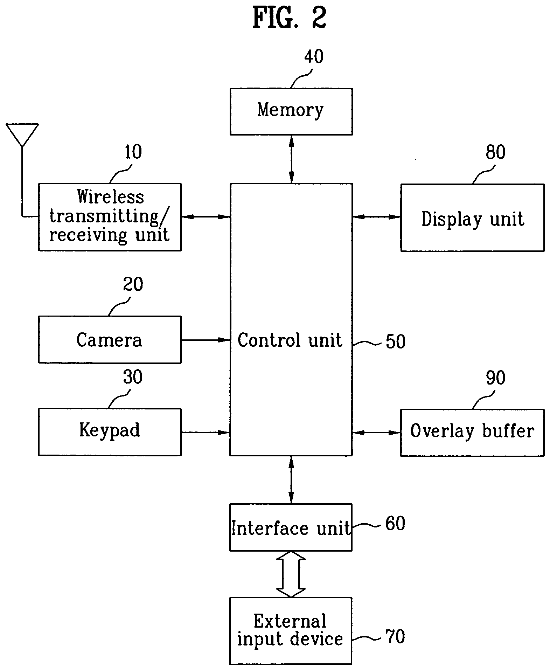

FIG. 2 is a block diagram of a terminal according to the present invention, in which an internal configuration of the terminal is shown.

Referring to FIG. 2, a terminal according to the present invention includes a wireless transmitting/receiving unit 10 transmitting/receiving a wireless signal, a camera 20, a memory 40 storing a plurality of icon data, a keypad 30 selecting at least one or more icons stored in the memory 40 to input position information to be displayed, a control unit 50 generating image control signal using a signal provided by the keypad 30, the control unit 50 controlling the generated icon control signal to be transferred to a correspondent video communication terminal together with an image provided by the camera 20, the control unit analyzing the image control signal received via the wireless transmitting/receiving unit 10, the control unit 50 controlling icon information to be displayed on a display unit 80 by reading the corresponding icon information from the memory 40, an overlay buffer 90 used as a temporary storage place to superimpose the image provided by the camera 20 with the icon designated by a user according to a control signal of the control unit 50, and an interface unit 60 interfacing with an external input device 70 storing data to be added to an image provided by the camera 20.

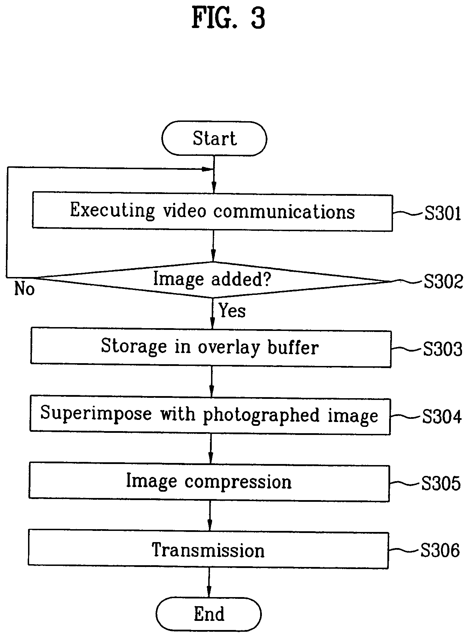

FIG. 3 is a flowchart of a method of processing an image in video communications according to one embodiment of the present invention.

Referring to FIG. 3, video communications with at least one or more correspondent terminals are performed. In particular, the present invention enables one-to-one (1:1) video communications and is applicable to group communications between at least two users as well (S301).

An image is added on a touch screen using a stylus pen or the like in the course of the video communications or an image adding function is activated by pressing a prescribed designated button. The touch screen is taken as an example for the following embodiment of the present invention. Optionally, other input devices are also available for the present invention (S302).

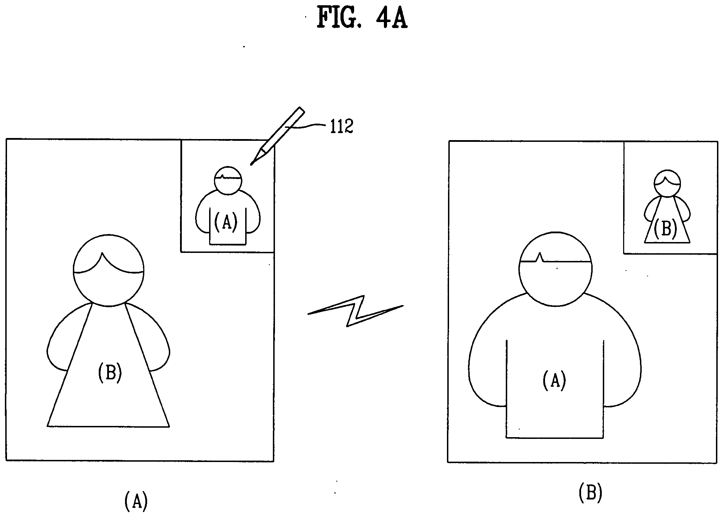

FIGs. 4A to 4C are exemplary diagrams of display screens in the course of executing an image processing method according to one embodiment of the present invention, in which display examples of the screens are shown.

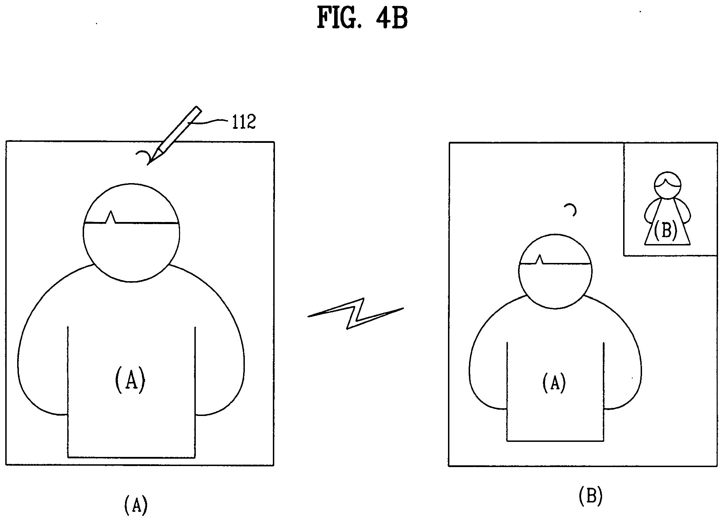

Referring to FIG. 4A and FIG. 4B, if a stylus pen 112 is contacted with a screen of a terminal user (A), an image can be magnified or a position of the image can be changed.

In video communications, an image provided by a correspondent party is displayed large, whereas an image transferred to the correspondent party is displayed small.

The position of the images on the display can be changed. While an image is magnified, an image is added using the stylus pen 112.

In this case, the added image is stored in the overlay buffer 90. Since the added image inputted through the stylus pen 112 is stored in the overlay buffer 90 only, the image does not affect a speed according to data processing. So, by having the overlay buffer 90 include random data except the added image, it is able to reduce a quantity of data (S303).

The control unit 50 superimposes the image stored in the overlay buffer 90 with the image provided by the camera (S304).

Subsequently, the superimposed image is compressed (S305) and is then transmitted to the correspondent terminal via the wireless transmitting/receiving unit 10 (S306). And, it is apparent that a codec unit (not shown in the drawings) is configured to the control unit 50 to superimpose the image stored in the overlay buffer 90 and the image provided by the camera together and to compress the superimposed image.

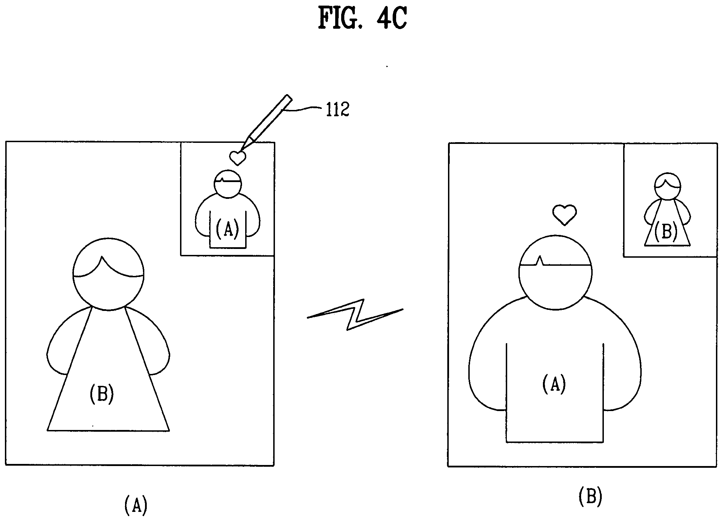

There is no change in a size of image data transmitted to the terminal (B) from the terminal (A). Namely, the image stored in the overlay buffer is superimposed on the image provided by the camera. The superimposed image is compressed and then transmitted. In FIG. 4B and FIG. 4C, an image added to the terminal of the user (A) is displayed on the display device of the correspondent party terminal (B) in real time.

In the above embodiment of the present invention, an additional image is added to a touchscreen of the user (A) and displayed on the terminal of the correspondent party (B) in real time. Optionally, after an image to be added has been completed via the stylus pen, superimpose, compression and transmission can be performed on both of the completed image and the image currently photographed via the camera through a separate transmission menu.

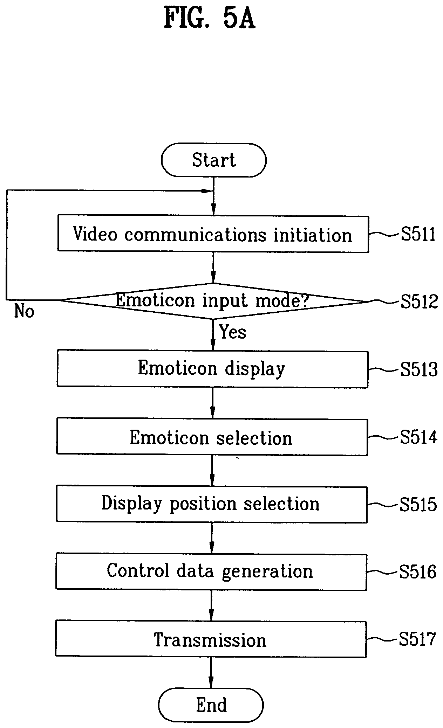

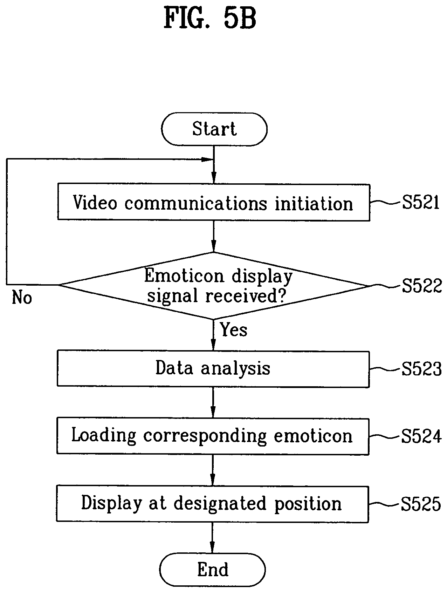

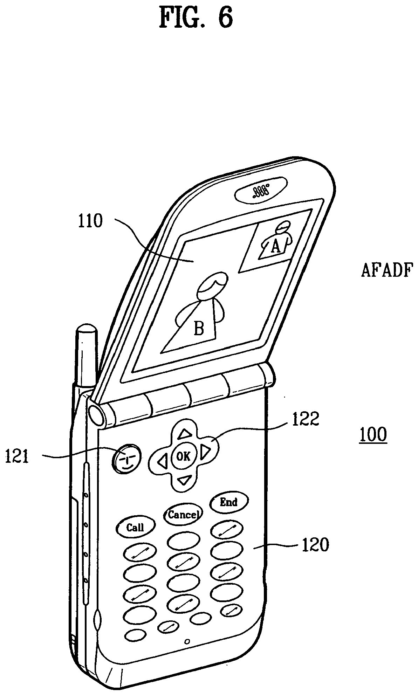

FIG. 5A and FIG. 5B are flowcharts of a method of processing an image in video communications according to another embodiment of the present invention, and FIG. 6 is a perspective diagram of a terminal according to one embodiment of the present invention, in which a button is provided to a lateral side of the terminal to implement an icon input mode.

A terminal 100, as shown in FIG. 6, according to one embodiment of the present invention includes a keypad 120 and an icon input mode switching key 121 provided to the keypad 120, and more particularly, next to a navigation key 122. This configuration is just exemplary for the embodiment of the present invention. Alternatively, an icon input mode switching key can be provided to a lateral side of a terminal. Alternatively, a function of an icon input mode switching key can be assigned to one of a plurality of buttons on a keypad of a general terminal.

FIG. 5A shows a process of generating an image control signal and transmitting the generated signal to a correspondent terminal.

Referring to FIG. 5A, video communications with at least one correspondent terminal are performed using a terminal provided with a camera (S511). Concepts of the present invention are applicable to multi-user video communications as well as one-to-one communications. Namely, an icon display control signal can be transmitted to one of a plurality of terminals executing the same application, some of the terminals or the entire terminals.

In the course of the video communications, a user presses an icon input mode switching key to express her or his feeling simply and funny as an icon. As mentioned in the foregoing description, the icon input mode switching key 121 can be provided to a keypad or a lateral side of the terminal separately. Alternatively, a function of the icon input mode switching key can be assigned to a random key that is not used in performing the video communications.

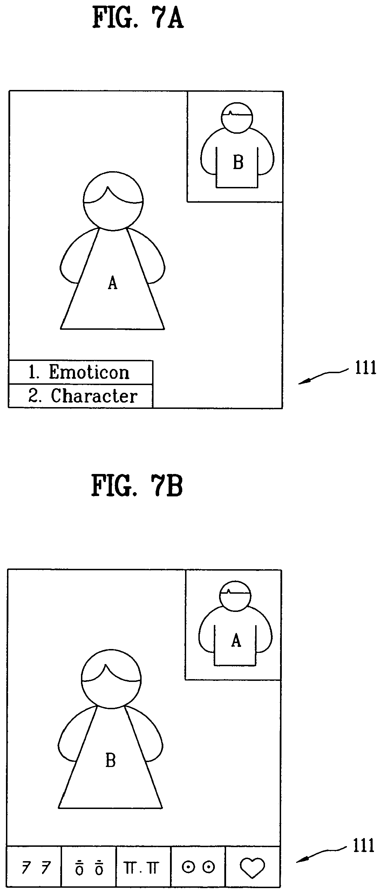

Once the icon input mode switching key 121 is pressed, an icon input mode is entered according to a corresponding input signal generated from the pressed key (S512). Subsequently, a popup menu, as shown in FIG. 7A, can be outputted to one side of a screen to enable the user to select whether to input an icon or characters. This is because the user may wish to write characters on the screen instead of using the prepared icon.

Assuming that the user selects the icon input, a plurality of icons, a shown in FIG. 7B, are displayed on a partial area 111 of the screen. The user then selects a specific one of the icons using the navigation key 122.

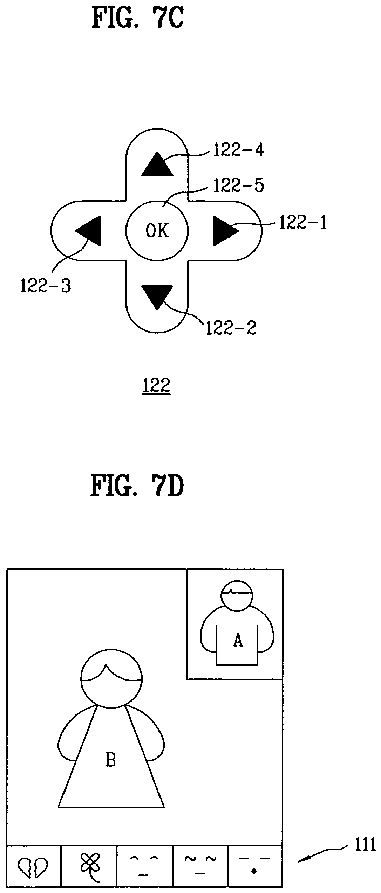

An example of the navigation key 122 is shown in FIG. 7C. The specific icon on an icon display area can be selected using a right or left direction key 122-1 or 122-3. Besides, an icon group can be changed using an upward or downward key 122-4 or 122-2.

So, if the downward key 122-2 is pressed in the state shown in FIG. 5B, the icon group can be changed into another icon group shown in FIG. 7D (S513).

If the icon to be transmitted is selected using a selection key 122-5 (S514), a procedure to select a position at which the selected icon will be displayed is executed.

Meanwhile, a case that a user attempts to display characters on an image may occur in the course of video communications. And, A procedure for this case is explained as follows.

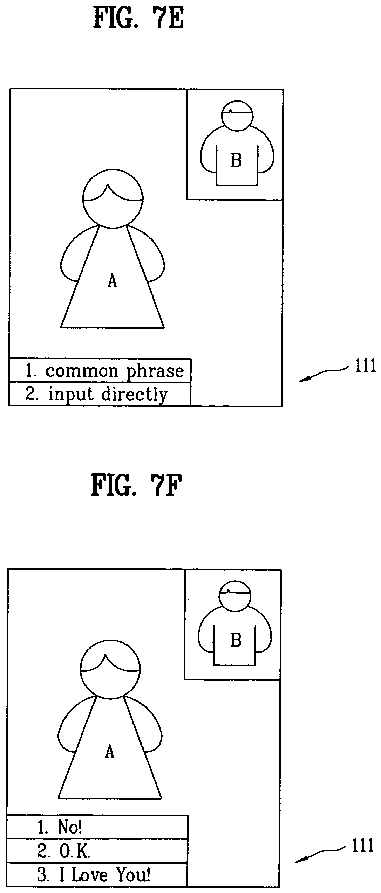

First of all, an image, as shown in FIG. 7E, enabling a user to select a common phrase or input characters directly. In this case, the common phrase means a phrase that is frequently used in general. And, the common phrase is stored in advance by a terminal manufacturer or stored in direct by a user. And, the direct input is used for a case that a user himself writes a phrase under the present circumstance.

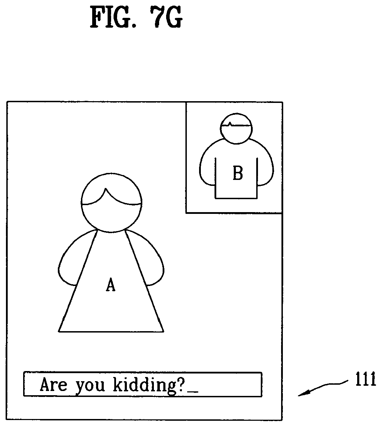

For instance, in case that a user selects a phrase, a common phrase list, as shown in Fig. 7F, stored in a terminal is displayed. In the present embodiment, the common phrase list is entirely displayed. Yet, the common phrase list can be displayed according to a theme classification or a feeling state classification. In case that a user selects the direct input shown on the screen of FIG. 7E, a character input window, as shown in FIG. 7G, is provided to a prescribed portion of a screen. And, a user writes out a message to be delivered using an input device such as a keypad and the like.

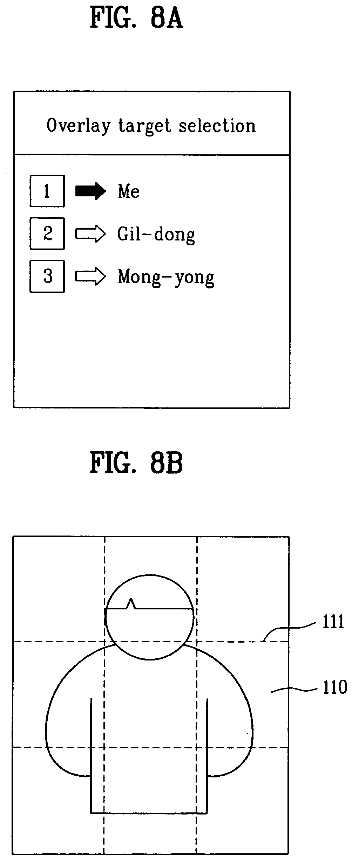

If an icon or common phrase to be transmitted is selected or an input of characters is completed, an image to select a target terminal to be displayed like FIG. 8A is outputted.

In particular, it is selected whether the selected icon will be overlaid on an image on the user's terminal or an image on the correspondent party's terminal. In case that group communications are executed, one of a plurality of group communication members can be selected. In this case, an overlay image can be sent to all of the group communication members or to some of the group communication members selectively. For instance, while the group communications are executed between three users A, B and C, it may happen that an image that an icon is overlaid on an image of the user A can be viewed by the users B and C only.

Once the selection of the image (terminal included in case of group communications) on which the icon will be overlaid is completed, a position where the icon will overlaid to be displayed is selected.

In case that a display panel of the user is a touch panel, a position to be represented, as shown in FIG. 8B, can be accurately selected using a stylus pen 112 or the like.

Meanwhile, a method of selecting an icon display position using a keypad is explained as follows.

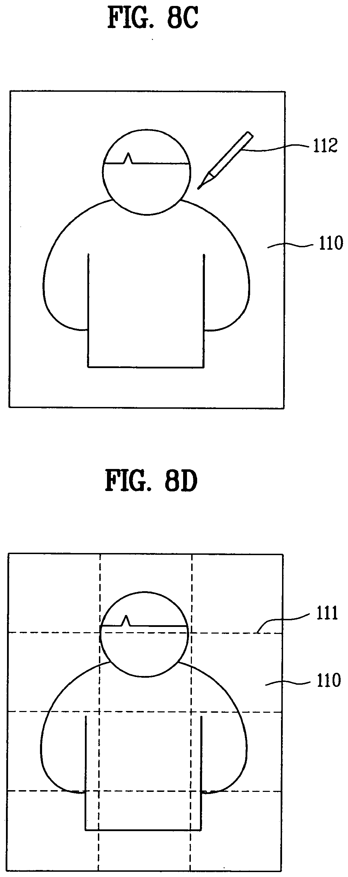

First of all, a screen, as shown in FIG. 8C, is divided into nine areas using a virtual line 113. Numerals of the keypad can be made to correspond to the divided areas, respectively. In general, a terminal has a keypad configuration including 3 rows by three columns. And, '1' is assigned to a left upper end and '9' is assigned to a right lower end. So, the position where the icon will be displayed can be selected using the keypad configuration. Alternatively, a screen, as shown in FIG. 8D, can be divided into 12 areas.

For more detailed representation of the icon position, a number matching a position resulting from dividing one of the 9 divided areas of the screen into 9 sub-areas can be selected. In particular, it can be expected that the screen can be divided into 81 areas using two numerals of the keypad. A firstly inputted numeral indicates one of the 9 divided areas and a next numeral indicates a position corresponding to one of the 9 sub-areas configuring one of the 9 divided areas of the screen. For instance, '55' indicates a center, '11' indicates a left most upper part, and '99' indicates a right very lower part. In case of using 12-divided screen shown in FIG. 8D, '**' is assigned to a left most lower end and '##' is assigned to a right very lower end (S515).

Once the target icon and the position where the target icon will be displayed are selected, the control unit generates image control signal including the corresponding selection information. In this case, the generated image control signal includes the target icon and display position information only. So, since a code indicating the corresponding icon is transmitted instead of the icon itself, a size of the data is relatively small (S516).

Subsequently, the generated control data is transmitted in a packet format to the correspondent terminal via the wireless transmitting/receiving unit (S517).

Meanwhile, operations of a terminal in an icon receiving side are executed according to the flowchart shown in FIG. 5B.

First of all, while the video communications are performed (S521), an icon display control signal is received (S522).

By analysing the received image control signal (S523), the corresponding icon information is read from the memory (S524). In particular, since the icon itself is not included in the icon display control data, a corresponding icon is read from the memory.

Subsequently, by extracting information for a position to be displayed, the icon read from the memory is overlaid on a designated position on an image of the user or the displayed video communication image provided by the correspondent party (S525).

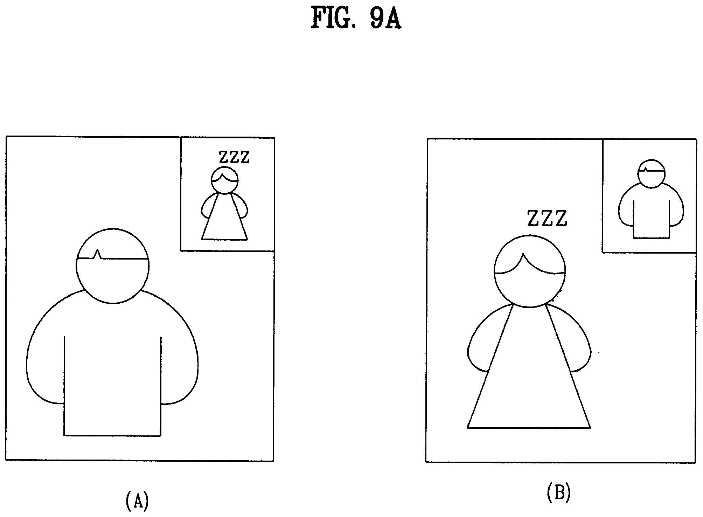

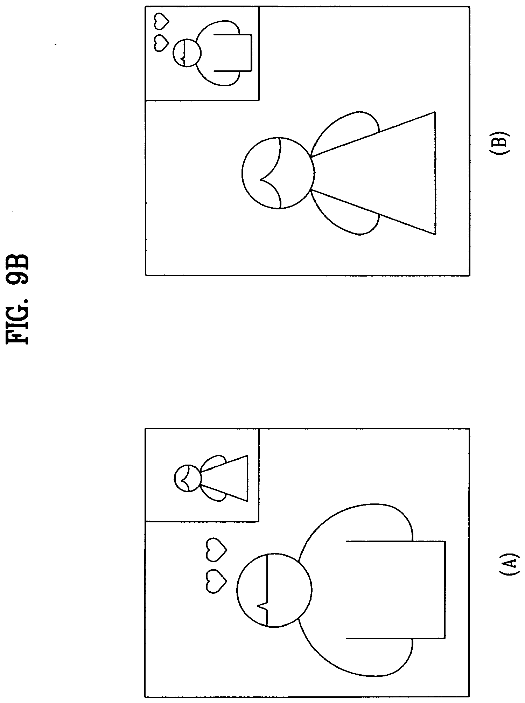

FIG. 9A and FIG. 9B are exemplary diagrams of icons displayed on display units of two terminals, respectively according to an embodiment of the present invention.

Referring to FIG. 9A, a user (A) displays an icon 'zzz' expressing a laugh on her/his image. In this case, the icon sent by the user (A) is overlaid on a video image of the user (A) displayed on a display device of a terminal of a user (B). It is possible to make sound in the designated terminal if the image control signal includes sound data or sound control signal. In addition, if the icon is a kind of animation icon, the icon can move on the image displaying on the display unit of the designated terminal in overlapping status.

FIG. 9B, which is similar to FIG. 9A, shows an exemplary case that a user (A) attempts to overlay an icon ' 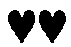 ' on an image of a user (B) as a correspondent party in video communications. In particular, an icon displayed on a video image of a user (B) displayed on a display unit of a terminal of the user (A) is overlaid to be displayed on a correspondent terminal.

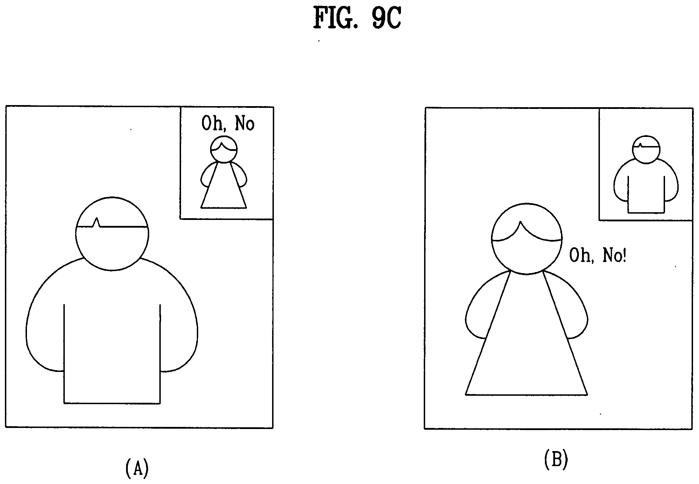

FIG. 9C shows the case that a user (A) attempts to overlay a common phrase on his/her image displayed on a display unit of a user (B) as a correspondent party in video communications. If a user (A) inputs characters directly, the characters input by a user (A) would be overlaid on a video image of a user (A) displayed on a display unit of a terminal of the user (B), too.

Accordingly, the present invention provides the following effects or advantages.

First of all, in performing video communications using mobile communication terminals, an icon code and position information are transmitted by real time to display an icon on both screens of calling and called parties with small data size. Hence, the present invention enables a video chatting function to be dynamically executed.

It will be apparent to those skilled in the art that various modifications and variations can be made in the present invention.

For instance, in the description of the present invention, same icons are provided to a terminal sending an image control signal and a terminal receiving the image control signal. Yet, the present invention is further applicable to a case that icon data is transmitted by a transmitting terminal together with an image control signal if a receiving terminal is not provided with a corresponding icon.

Thus, it is intended that the present invention covers the modifications and variations of this invention provided they come within the scope of the appended claims and their equivalents.

## Claims

1. A method of image processing in group video communications between group communication members using a mobile communication terminal (1, 2), comprising:
transmitting a video image captured via a camera (20) provided to the mobile communication terminal (1,2) to at least one other terminal (1,2);
receiving a video image from the at least one other terminal (1,2);
displaying the captured video image and the received video image; and
receiving a selection by the user of one of a plurality of icons;
**characterized by** further comprising the steps of:
displaying an image for selecting at least one target terminal;
receiving a selection by the user of the at
least one target terminal from the user mobile communication terminal (1,2) and the at least one other terminal (1, 2) on which the selected icon is to be displayed;
receiving a selection by the user of a position for displaying the selected icon on the captured video image in response to an input by a user while performing the video communications with at least the other one terminal (1,2) using the mobile communication terminal (1,2);
further displaying the selected icon on the captured video image at the selected position of the icon together with the received video image;
generating an image control signal which includes information of the selected icon and the selected position of the icon;
transmitting the image control signal to the at least one selected target terminal (1,2) while performing the video communications; receiving an input to select at least one of the group communication members; and
sending the icon as an overlay image to the at least one of the selected group communication members.

2. The method of claim 1, wherein the image control signal is a packet data.

3. The method of claim 1, wherein the icon and the position information are inputted via a touchscreen.

4. The method of claim 1, wherein the position information of the icon indicates at least one position of a screen divided similar to a keypad arrangement.

5. The method of claim 1, further comprising the step of selecting a correspondent terminal to transmit the image control signal to.

6. The method of claim 1, wherein the icon is displayed in real time.

7. A mobile communication terminal for group video communications comprising:
a camera (20) adapted for capturing a video image;
a wireless transmitting/receiving unit (10) adapted for transmitting the captured video image to at least one other terminal (1,2) and for receiving a video image from the at least one other terminal (1,2);
a memory (40) adapted for storing data of a plurality of icons;
a display unit (80) adapted to display the captured video image and the received video image;
**characterized by** further comprising:
an input unit (30) adapted to receive a selection from a user of at least one of a plurality of the icons stored in the memory (40), and to receive a user input of position information for displaying the selected at least one icon on the captured video image in the course of video communications; and
a control unit (50) adapted for:
displaying an image for selecting at least one target terminal;
receiving a user a selection by the user of the at least one target terminal from the user mobile communication terminal (1,2) and the at least one other terminal (1, 2) on which the selected icon is to be displayed; and
generating an image control signal which includes information of the selected icon and the selected position of the icon and for controlling the wireless transmitting/receiving unit (10) to transmit the image control signal to the at least one selected target terminal (1,2) together with the captured video image captured by the camera (20);
receiving an input to select at least one of group communication members; and
sending the icon as an overlay image to the selected group communication members,
wherein the display unit (80) is further adapted to display the selected icon at the selected position on the captured video image together with the received video image.

8. The mobile communication terminal of claim 7, wherein the image control signal is packet data.

9. The mobile communication terminal of claim 7, wherein the input unit (30) comprises a touchscreen.

10. The mobile communication terminal of claim 7, wherein the input unit (30) comprises a terminal keypad, wherein at least one position on a screen divided similar to keypad arrangement is designated as an icon displaying position using the terminal keypad.

11. The mobile communication terminal of claim 7, wherein the image control signal includes code information of the selected at least one icon and the position information for displaying the selected at least one icon only.

## Patentansprüche

1. Verfahren zur Bildverarbeitung bei Gruppenvideoübertragung zwischen Gruppenübertragungsmitgliedern unter Verwendung eines mobilen Übertragungsendgeräts (1, 2), wobei das Verfahren umfasst:
Senden eines über eine Kamera (20), die an dem mobilen Übertragungsendgerät (1, 2) vorgesehen ist, aufgenommenen Videobilds an mindestens ein weiteres Endgerät (1, 2);
Empfangen eines Videobilds von dem mindestens einen weiteren Endgerät (1, 2);
Anzeigen des aufgenommenen Videobilds und des empfangenen Videobilds; und
Empfangen einer Benutzerauswahl eines aus einer Vielzahl von Symbolen;
**dadurch gekennzeichnet, dass** das Verfahren ferner die Schritte umfasst:
Anzeigen eines Bilds zum Auswählen mindestens eines Ziel-Endgeräts;
Empfangen einer Benutzerauswahl des mindestens einen Ziel-Endgeräts von dem mobilen Übertragungsendgerät (1, 2) des Benutzers und dem mindestens einen weiteren Endgerät (1, 2), auf welchem das ausgewählte Symbol angezeigt werden soll;
Empfangen einer Benutzerauswahl einer Position zum Anzeigen des ausgewählten Symbols auf dem aufgenommenen Videobild als Antwort auf eine Benutzereingabe, während die Videoübertragung mit dem mindestens einen weiteren Endgerät (1, 2) unter Verwendung des mobilen Übertragungsendgeräts (1, 2) durchgeführt wird;
weiter Anzeigen des ausgewählten Symbols auf dem aufgenommenen Videobild an der ausgewählten Position des Symbols zusammen mit dem empfangenen Videobild;
Erzeugen eines Bildsteuersignals, das Information des ausgewählten Symbols und der ausgewählten Position des Symbols umfasst;
Senden des Bildsteuersignals an das mindestens eine ausgewählte Ziel-Endgerät (1, 2), während die Videoübertragung durchgeführt wird;
Empfangen einer Eingabe zum Auswählen mindestens eines der Gruppenübertragungsmitglieder; und
Senden des Symbols als ein Überlagerungsbild an das mindestens eine der ausgewählten Gruppenübertragungsmitglieder.

2. Verfahren nach Anspruch 1, wobei das Bildsteuersignal aus Paketdaten besteht.

3. Verfahren nach Anspruch 1, wobei das Symbol und die Positionsinformation über einen Touchscreen eingegeben werden.

4. Verfahren nach Anspruch 1, wobei die Positionsinformation des Symbols mindestens eine Position eines Bildschirms angibt, der ähnlich einer Tastaturanordnung aufgeteilt ist.

5. Verfahren nach Anspruch 1, ferner umfassend den Schritt eines Auswählens eines korrespondierenden Endgeräts, an welches das Bildsteuersignal gesendet werden soll.

6. Verfahren nach Anspruch 1, wobei das Symbol in Echtzeit angezeigt wird.

7. Mobiles Übertragungsendgerät zur Gruppenvideoübertragung, umfassend:
eine Kamera (20), die zum Aufnehmen eines Videobilds angepasst ist;
eine Drahtlos-Sende-/Empfangseinheit (10), die zum Senden des aufgenommenen Videobilds an mindestens ein weiteres Endgerät (1, 2) und zum Empfangen eines Videobilds von dem mindestens einen weiteren Endgerät (1, 2) angepasst ist;
einen Speicher (40), der zum Speichern von Daten einer Vielzahl von Symbolen angepasst ist;
eine Anzeigeeinheit (80), die zum Anzeigen des aufgenommenen Videobilds und des empfangenen Videobilds angepasst ist;
**dadurch gekennzeichnet, dass** es ferner umfasst:
eine Eingabeeinheit (30), die angepasst ist, um eine Benutzerauswahl mindestens eines aus einer Vielzahl von in dem Speicher (40) gespeicherten Symbolen zu empfangen und eine Benutzereingabe von Positionsinformation zum Anzeigen des ausgewählten mindestens einen Symbols auf dem aufgenommenen Videobild im Verlauf der Videoübertragung zu empfangen; und
eine Steuereinheit (50), die angepasst ist zum:
Anzeigen eines Bilds zum Auswählen mindestens eines Ziel-Endgeräts;
Empfangen einer Benutzerauswahl des mindestens einen Ziel-Endgeräts aus dem mobilen Übertragungsendgerät (1, 2) des Benutzers und dem mindestens einen weiteren Endgerät (1, 2), auf welchem das ausgewählte Symbol angezeigt werden soll; und
Erzeugen eines Bildsteuersignals, das Information des ausgewählten Symbols und der ausgewählten Position des Symbols umfasst, zum Steuern der Drahtlos-Sende-/Empfangseinheit (10), um das Bildsteuersignal an das mindestens eine ausgewählte Ziel-Endgerät (1, 2) zusammen mit dem aufgenommenen Videobild, das von der Kamera (20) aufgenommen wird, zu senden;
Empfangen einer Eingabe zum Auswählen mindestens eines der Gruppenübertragungsmitglieder; und
Senden des Symbols als ein Überlagerungsbild an die ausgewählten Gruppenübertragungsmitglieder,
wobei die Anzeigeeinheit (80) ferner angepasst ist, um das ausgewählte Symbol an der ausgewählten Position auf dem aufgenommenen Videobild zusammen mit dem empfangenen Videobild anzuzeigen.

8. Mobiles Übertragungsendgerät nach Anspruch 7, wobei das Bildsteuersignal aus Paketdaten besteht.

9. Mobiles Übertragungsendgerät nach Anspruch 7, wobei die Eingabeeinheit (30) einen Touchscreen umfasst.

10. Mobiles Übertragungsendgerät nach Anspruch 7, wobei die Eingabeeinheit (30) eine Endgerätetastatur umfasst und wobei mindestens eine Position auf einem Bildschirm, der ähnlich einer Tastaturanordnung aufgeteilt ist, unter Verwendung der Endgerätetastatur als eine Symbolanzeigeposition ausgewiesen wird.

11. Mobiles Übertragungsendgerät nach Anspruch 7, wobei das Bildsteuersignal Codeinformation des ausgewählten mindestens einen Symbols und die Positionsinformation zum alleinigen Anzeigen des ausgewählten mindestens einen Symbols umfasst.

## Revendications

1. Procédé de traitement d'image dans des communications vidéo de groupe entre des membres d'un groupe de communication utilisant un terminal de communication mobile (1, 2), comprenant les étapes consistant à :
transmettre une image vidéo capturée via une caméra (20) prévue sur le terminal de communication mobile (1, 2) vers au moins un autre terminal (1, 2) ;
recevoir une image vidéo depuis le au moins un autre terminal (1, 2) ;
afficher l'image vidéo capturée et l'image vidéo reçue ; et
recevoir une sélection par l'utilisateur de l'une parmi une pluralité d'icônes ;
**caractérisé en ce qu'**il comprend en outre les étapes consistant à :
afficher une image pour sélectionner au moins un terminal cible ;
recevoir une sélection par l'utilisateur du au moins un terminal cible depuis le terminal de communication mobile (1, 2) de l'utilisateur et du au moins un autre terminal (1, 2) sur lequel l'icône sélectionnée doit être affichée ;
recevoir une sélection par l'utilisateur d'une position pour l'affichage de l'icône sélectionnée sur l'image vidéo capturée en réponse à une entrée par un utilisateur tout en réalisant les communications vidéo avec le au moins un autre terminal (1, 2) utilisant le terminal de communication mobile (1, 2) ;
afficher en outre l'icône sélectionnée sur l'image vidéo capturée au niveau de la position sélectionnée de l'icône conjointement avec l'image vidéo reçue ;
générer un signal de commande d'image qui comprend des informations de l'icône sélectionnée et la position sélectionnée de l'icône ;
transmettre le signal de commande d'image vers le au moins un terminal (1, 2) cible sélectionné tout en réalisant les communications vidéo ;
recevoir une entrée pour sélectionner au moins l'un parmi les membres du groupe de communication ; et
envoyer l'icône en tant qu'image de superposition vers le au moins un parmi les membres de groupe de communication sélectionnés.

2. Procédé selon la revendication 1, dans lequel le signal de commande d'image correspond à des données en paquets.

3. Procédé selon la revendication 1, dans lequel l'icône et les informations de position sont délivrées en entrée via un écran tactile.

4. Procédé selon la revendication 1, dans lequel les informations de position de l'icône indiquent au moins une position d'un écran divisé similaire à un agencement de clavier.

5. Procédé selon la revendication 1, comprenant en outre l'étape consistant à sélectionner un terminal correspondant pour lui transmettre le signal de commande d'image.

6. Procédé selon la revendication 1, dans lequel icône est affichée en temps réel.

7. Terminal de communication mobile pour des communications vidéo de groupe comprenant :
une caméra (20) adaptée pour capturer une image vidéo ;
une unité (10) de transmission/réception sans fil adaptée pour transmettre l'image vidéo capturée vers au moins un autre terminal (1, 2) et pour recevoir une image vidéo depuis le au moins un autre terminal (1, 2) ;
une mémoire (40) adaptée pour stocker des données d'une pluralité d'icônes ;
une unité d'affichage (80) adaptée pour afficher l'image vidéo capturée et l'image vidéo reçue ;
**caractérisé en ce qu'**il comprend en outre :
une unité d'entrée (30) adaptée pour recevoir une sélection depuis un utilisateur d'au moins l'une parmi une pluralité d'icônes stockées dans la mémoire (40), et pour recevoir une entrée utilisateur des informations de position pour afficher la au moins une icône sélectionnée sur l'image vidéo capturée au cours des communications vidéo ; et
une unité de commande (50) adaptée pour :
afficher une image pour sélectionner au moins un terminal cible ;
recevoir une sélection utilisateur par l'utilisateur du au moins un terminal cible à partir du terminal (1, 2) de communication mobile utilisateur et le au moins un autre terminal (1, 2) sur lequel l'icône sélectionnée doit être affichée ; et
générer un signal de commande d'image qui comprend des informations de l'icône sélectionnée et de position sélectionnée de l'icône et destiné à commander l'unité (10) de transmission/réception sans fil pour transmettre le signal de commande d'image vers le au moins un terminal cible sélectionné (1, 2) conjointement avec l'image vidéo capturée, capturée par la caméra (20) ;
recevoir une entrée pour sélectionner au moins l'un parmi les membres du groupe de communication ; et
envoyer l'icône en tant qu'image de superposition vers les membres du groupe de communication sélectionnés,
dans lequel l'unité d'affichage (80) est en outre adaptée pour afficher l'icône sélectionnée au niveau de la position sélectionnée sur l'image vidéo capturée conjointement avec l'image vidéo reçue.

8. Terminal de communication mobile selon la revendication 7, dans lequel le signal de commande d'image correspond à des données en paquets.

9. Terminal de communication mobile selon la revendication 7, dans lequel l'unité d'entrée (30) comprend un écran tactile.

10. Terminal de communication mobile selon la revendication 7, dans lequel l'unité d'entrée (30) comprend un clavier de terminal, dans lequel au moins une position sur un écran divisé similaire à un agencement de clavier est désignée comme une position d'affichage d'icône en utilisant le clavier du terminal.

11. Terminal de communication mobile selon la revendication 7, dans lequel le signal de commande d'image comprend des informations de code de la au moins une icône sélectionnée et des informations de position pour afficher la au moins une icône sélectionnée uniquement.
